# EUROPEAN PATENT SPECIFICATION

(11) **EP 2 669 985 B1**
(45) Date of publication and mention of the grant of the patent: **25.03.2015**
(21) Application number: 13305702.6
(22) Date of filing: 29.05.2013
(51) Int. Cl.: H01M 8/24, H01M 8/02

(54) **Sealing arrangement for fuel cells and SOFC's**
Dichtungsanordnung für Brennstoffzellen und SOFCs
Etancheite pour des piles à combustible et SOFC

(30) Priority: 30.05.2012 JP 2012123387
(43) Date of publication of application: 04.12.2013
(73) Proprietor: Kabushiki Kaisha Riken, Tokyo 102-8202 (JP)
(72) Inventor: OKAMOTO, Takashi, SAITAMA, 360-8522 (JP); YAN, Yongtie, SAITAMA, 360-8522 (JP)
(74) Representative: Peguet, Wilfried

(56) References cited:
- EP-A1- 1 437 783
- WO-A2-2005/008104
- US-A1- 2009 023 049
- US-A1- 2011 045 378

## Description

### FIELD OF THE INVENTION

The present invention relates to a fuel cell.

### BACKGROUND OF THE INVENTION

There has been known a solid oxide fuel cell (hereinafter abbreviated to "SOFC") in which combustible gas such as hydrogen and oxidizing gas containing oxygen are supplied to a cell of a fuel cell (hereinafter also referred to as "cell" simply) having a fuel electrode and an air electrode formed with a solid oxide electrolyte interposed therebetween so as to generate electric power. Due to high-temperature operation, the SOFC can obtain high power generation efficiency when the SOFC is combined with gas turbine power generation using the reforming of fuel gas and the waste heat thereof. In addition, the SOFC can generate electric power even with fuel gas other than pure hydrogen. Therefore, the SOFC is expected as a next-generation fuel cell.

The SOFC has to be sealed to prevent the fuel gas and the oxidizing gas from being mixed with each other. A glass-based seal material has been chiefly used in the background art.

JP-A-2010-205534 has given a proposal for a bonding material for glass, metal, etc. The bonding material secures matching in thermal expansion coefficient between a cell and a support for supporting the cell, and has a gas seal property.

In addition, JP-A-2011-71131 has given a proposal for a method in which a cell is inserted into a cell insertion port of a support and a gap between the cell and the support is filled with glass paste or the like so as to be overheated.

Further, JP-A-2012-31967 has given a proposal for a heat-resistant gasket (seal complex) composed of expanded graphite.

Document WO 2005/008 104 provides a seal assembly for a solid oxide fuel cell stack, includes at least two fuel cell stack components having opposed surfaces seal member disposed between the surfaces, wherein the seal member is a compliant seal member that is mechanically compliant in both in-plane and out-of-plane directions relative to the surfaces. The seal member is advantageously formed of one more substantially continuous fibers. Further, preferred materials for the seal member are provided which advantageously allow for a desired level of impermeability while preventing contamination of the fuel cell stack.

### SUMMARY OF THE INVENTION

It is difficult to perfectly match the thermal expansion coefficient of a seal material with the thermal expansion coefficient of a cell a fuel cell and the thermal expansion coefficient of a support. When a glass seal material is used, seal may be damaged due to heat cycles between a normal-temperature state during suspension and a high-temperature (e.g. 800°C) state during operation. Thus, there is a fear that electrodes may deteriorate due to leaking gas. In addition, there is also a fear that the cell may be broken due to imperfect relaxation in thermal expansion/shrinkage between the cell and the support. Particularly in a residential stationary fuel cell which has been developed vigorously in recent years, the number of times of start and stop increases as compared with that in a large-capacity power generation type fuel cell. Thus, there is a fear that the aforementioned problems may be more conspicuous.

Although description has been made on the SOFC here, the aforementioned problems are problems not limited in the SOFC but generally existing in fuel batteries in which a temperature change may occur due to start and stop or a temperature change may occur due to installation environment.

The invention has been accomplished in consideration of the aforementioned circumstances. An object of the invention is to provide a fuel cell having a seal structure which is robust against a temperature change.

In order to achieve the foregoing object, a fuel cell according to the invention includes:
a cell which has a first electrode to be exposed to a first gas and a second electrode to be exposed to a second gas and which has a first circumferential surface consisting of a curved surface curved in a circular shape and connected to make a full circle, the first electrode and the second electrode being formed with an electrolyte interposed therebetween;
a holding member which has a second circumferential surface consisting of a curved surface curved in a circular shape and connected to make a full circle, and opposed to the first circumferential surface over the full circle, and which holds the cell; and
an annular seal material which is interposed between the first circumferential surface and the second circumferential surface to separate a channel of the first gas and a channel of the second gas from each other so that the seal material is not firmly fixed to at least one of the first circumferential surface and the second circumferential surface but can slide on the at least one of the first and second circumferential surfaces during thermal expansion/shrinkage.

The fuel cell according to the invention has the annular seal material which separates the channel of the first gas and the channel of the second gas from each other, and the seal material is not firmly fixed to at least one of the first circumferential surface and the second circumferential surface but can slide on at least one of the first and second circumferential surfaces during thermal expansion/shrinkage. Accordingly, distortion caused by dimensional change during the thermal expansion/shrinkage is relaxed by the sliding in spite of the difference in thermal expansion coefficient. Thus, the sealing can be prevented from being damaged or the cell can be prevented from being broken, so that a good seal property can be kept.

Here, in the aforementioned cell of the fuel cell according to the invention, the seal material is formed from the same material as the portion of the second circumferential surface of the holding member so that the seal material is not firmly fixed to at least the first circumferential surface but can slide on at least the first circumferential surface.

When the seal material is formed from the same material as the portion of the second circumferential surface, no distortion occurs between the seal material and the holding member due to the temperature change. In addition, distortion can be relaxed between the seal material and the first circumferential surface due to sliding during the thermal expansion/shrinkage.

In addition, in the aforementioned fuel cell according to the invention, it is preferable that a groove making a full circle in a circumferential direction is formed in one of the first circumferential surface and the second circumferential surface which is formed as a convex surface, and the seal material has a mating part such that the seal material can be fitted into the groove.

When the structure in which a groove is formed in the convex curved surface so that the seal material can be fitted therein is used, the seal material can be manufactured separately from the cell or the holding member. In addition, the seal material can be prevented from being misaligned after the seal material is fitted into the groove.

Here, it is preferable that the cell of the fuel cell is a disc-like cell having a first surface whose peripheral edge is circular and which acts as the first electrode, a second surface whose peripheral edge is circular and in which the second electrode is formed, and a peripheral surface which connects the peripheral edge of the first surface and the peripheral edge of the second surface with each other so as to make a full circle, the peripheral surface being the first circumferential surface, the groove being formed at the peripheral surface.

In the case of such a disc-like cell, a structure in which a groove is formed at the peripheral surface and the seal material is fitted into the groove can be used.

In addition, it is also a preferable structure that the cell of the fuel cell is a disc-like cell having a first surface whose peripheral edge is circular and in which the first electrode is formed, a second surface whose peripheral edge is circular and in which the second electrode is formed, and a peripheral surface which connects the peripheral edge of the first surface and the peripheral edge of the second surface with each other so as to make a full circle, while an internal space surrounded by an inner wall surface acting as the first electrode is further formed in the cell of the fuel cell and a gas channel communicating with the internal space is provided in the peripheral surface, the peripheral surface being the first circumferential surface, the groove being formed in each of a portion of the peripheral surface closer to the first surface than the gas channel and a portion of the peripheral surface closer to the second surface than the gas channel.

The invention can be also applied to the cell configured thus.

Further, it is also a preferable structure that:
the cell of the fuel cell is a cylindrical cell having an inner peripheral surface which acts as the first electrode and an outer peripheral surface in which the second electrode is formed, and an opening communicating with an internal space of the cell of the fuel cell is formed at least one end of the cell of the fuel cell, the inner peripheral surface being the first circumferential surface; and
the holding member has a columnar plug-in part which is plugged into the opening and in which a gas channel is formed, an outer peripheral surface of the plug-in part being the second circumferential surface, the groove being formed in the outer peripheral surface of the plug-in part.

In this manner, the invention can be also applied to the cylindrical cell.

As described above, a fuel cell having a robust seal structure against a temperature change of a heat cycle etc. can be configured according to the invention.

### BRIEF DESCRIPTION OF THE DRAWINGS

Fig. 1 is an exploded perspective view showing a unit structure corresponding to one cell in a fuel cell as a first embodiment of the invention.
Fig. 2 is a schematic perspective view of the cell.
Fig. 3 is a sectional view taken on the line with arrows A-A shown in Fig. 2.
Fig. 4 is a sectional view taken on the line with arrows B-B shown in Fig. 1.
Fig. 5 is a schematic view of a mating part of a seal material.
Fig. 6 is an external perspective view of a fuel cell according to a second embodiment of the invention.
Fig. 7 is a sectional view taken on the line with arrows C-C shown in Fig. 6.
Fig. 8 is a side view of one cell in the second embodiment of the invention.
Fig. 9 is an external perspective view of a fuel cell according to a third embodiment of the invention.
Fig. 10 is a sectional view taken on the line with arrows D-D shown in Fig. 9.
Fig. 11 is a graph showing experimental results.

### [Reference Signs List]

3: fuel cell
10, 20: unit
11, 21, 31: cell
11a, 111a, 211, 219a: first surface
11b, 111b, 212, 219b: second surface
11c, 111c, 213: peripheral surface
11d, 111d, 213d, 331bA, 331bB: groove
12, 22, 32: seal material
13, 13A, 13B, 23, 31A, 31B, 33A, 33B: cell holder
13a, 13b, 13c, 13d, 14b, 14c, 14d, 14e, 23a, 33a: hole
14, 14A, 14B: separator
21a: inner wall surface
21b, 31c: internal space
24: conductive material
23b, 151: fuel gas introduction channel
23c, 152: fuel gas discharge channel
29: screw
31a: inner peripheral surface
31b, 311b, 331aA, 331aB: outer peripheral surface
31d, 31e: opening
111, 219, 311: support
112: electrolyte
113, 216, 312: counter electrode
121: mating part
121a, 121b: step
141: fuel gas channel
142: support part
143: oxidizing gas channel
144: support part
201: base
213a: introduction port
213b: discharge port
215: anode electrode
201a: fuel gas introduction port
311A, 311B, 331A, 331B: plug-in part
332A: introduction opening
332B: discharge opening

### DETAILED DESCRIPTION OF THE INVENTION

Embodiments of the invention will be described below.

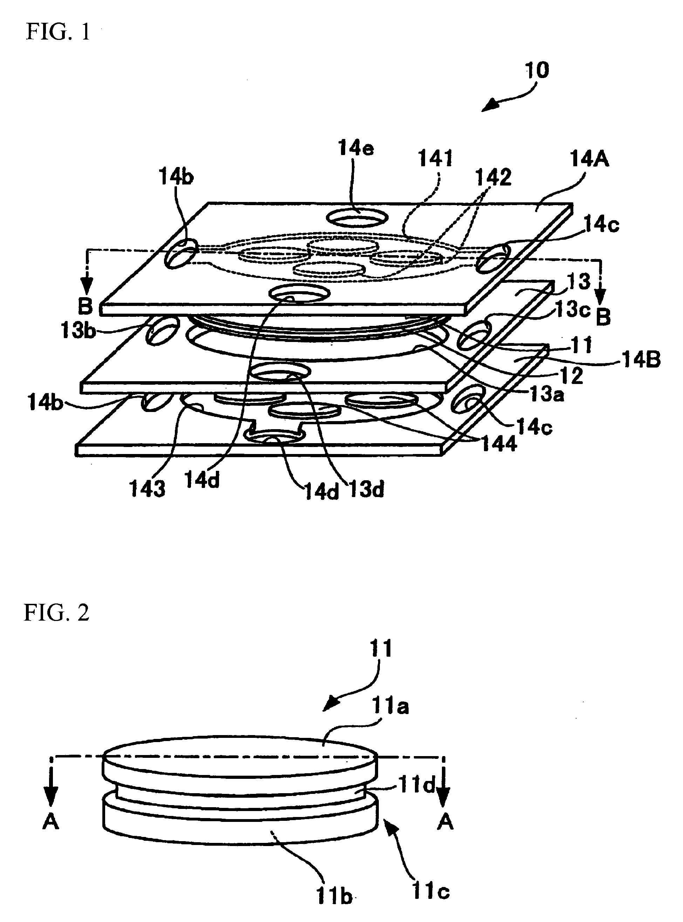

Fig. 1 is an exploded perspective view showing a unit structure corresponding to one cell in a fuel cell as a first embodiment of the invention.

Fig. 1 shows a unit 10 including a cell 11, a seal material 12, a cell holder 13, and two separators 14A and 14B.

Here, first, description will be made upon one cell 11 constituting the unit 10.

Fig. 2 is a schematic perspective view of the cell 11.

This cell 11 is a disc-like cell having a first surface 11a having a circular peripheral edge and acting as an anode, a second surface 11b having a circular peripheral edge likewise and acting as a cathode, and a peripheral surface 11c connecting the peripheral edge of the first surface 11a and the peripheral edge of the second surface 11b with each other so as to make a full circle. The peripheral surface 11c is a convex curved surface which is curved like a circle and which is connected to make a full circle. The peripheral surface 11c corresponds to an example of the first circumferential surface mentioned in the invention. A groove 11d making a full circle in the circumferential direction is formed at the peripheral surface 11c. The seal material 12 (see Fig. 1) is fitted into the groove 11d.

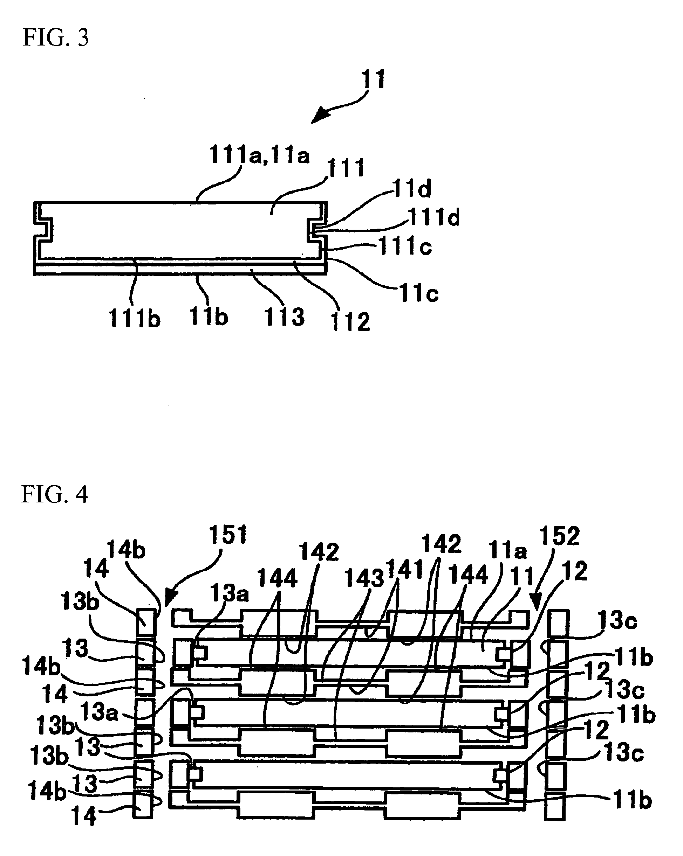

Fig. 3 is a sectional view taken on the line with arrows A-A shown in Fig. 2.

This cell 11 is an anode supported cell having a microstructural support 111 in which porous ceramics is covered with an anode active material.

The cell 11 shown in Fig. 3 includes the support 111, an electrolyte 112 which is laminated on the support 111 and is thinner in thickness than the support 111, and a counter electrode 113 which is laminated on the electrolyte 112 and is also thinner in thickness than the support 111. The counter electrode 113 serves as a cathode. The cell 11 has substantially the same shape and dimensions as the support 111 itself.

This support 111 is a disc-like support which has substantially the same outer shape as the cell 11 and which includes a first surface 111a whose peripheral edge is circular, a second surface 111b whose peripheral edge is circular likewise, and a peripheral surface 111c which makes a full circle to connect the peripheral edge of the first surface 111a and the peripheral edge of the second surface 111b with each other. A groove 111d making a full circle in the circumferential direction is formed at the peripheral surface 111c of the support 111.

The first surface 111a of the support serves as the first surface 11a of the cell 11, which serves directly as an anode to be exposed to fuel gas. On the other hand, the second surface 111b and the peripheral surface 111c of the support 111 excluding the first surface 111a are covered with the electrolyte 112. Thus, the fuel gas to which the first surface 11a is exposed is prevented from penetrating the support 111 and leaking therefrom.

Further, the counter electrode 113 serving as a cathode is laminated on the second surface 111b of the support 111 with the electrolyte 112 interposed therebetween. Thus, the second surface 11b of the cell 11 is formed.

Fig. 4 is a sectional view taken on the line with arrows B-B shown in Fig. 1. While Fig. 1 is an exploded perspective view of one unit 10, Fig. 4 is a sectional view of a structure in which a plurality of units are stacked. Specifically, a structure in which three units are stacked is shown in Fig. 4. Although two separators 14A and 14B holding the cell 11 therebetween are shown in Fig. 1, this is for the convenience of explanation. However, a real separator is a separator 14 having a shape in which separators 14A and 14B of two units adjacent to each other are coupled as shown in Fig. 4. The fuel cell according to the first embodiment will be further described below, mainly with reference to Figs. 1 and 4.

The cell 11 has a shape and a structure described with reference to Figs. 2 and 3. The seal material 12 is fitted into the groove 11d (see Figs. 2 and 3) of the peripheral surface 11c of the cell 11.

The cell holder 13 has a plate-like shape with the same thickness as the cell 11. A hole 13a into which the cell 11 is fitted is formed in the cell holder 13. The peripheral surface for marking off the hole 13a consists of a concave curved surface which is curved like a circle and which is connected to make a full circle. In the state where the cell 11 is fitted into the hole 13a, the hole 13a faces the peripheral surface 11c of the cell 11 over the full circle. The peripheral surface of the hole 13a corresponds to an example of the second circumferential surface mentioned in the invention.

The seal material 12 is interposed between the peripheral surface 11c of the cell 11 and the peripheral surface of the hole 13a of the cell holder 13. The seal material 12 plays a role to separate a channel of fuel gas flowing through a path where the fuel gas can contact the first surface 11a of the cell 11 acting as an anode from a channel of oxidizing gas flowing through a path where the oxidizing gas can contact the second surface 11b of the cell 11 acting as a cathode.

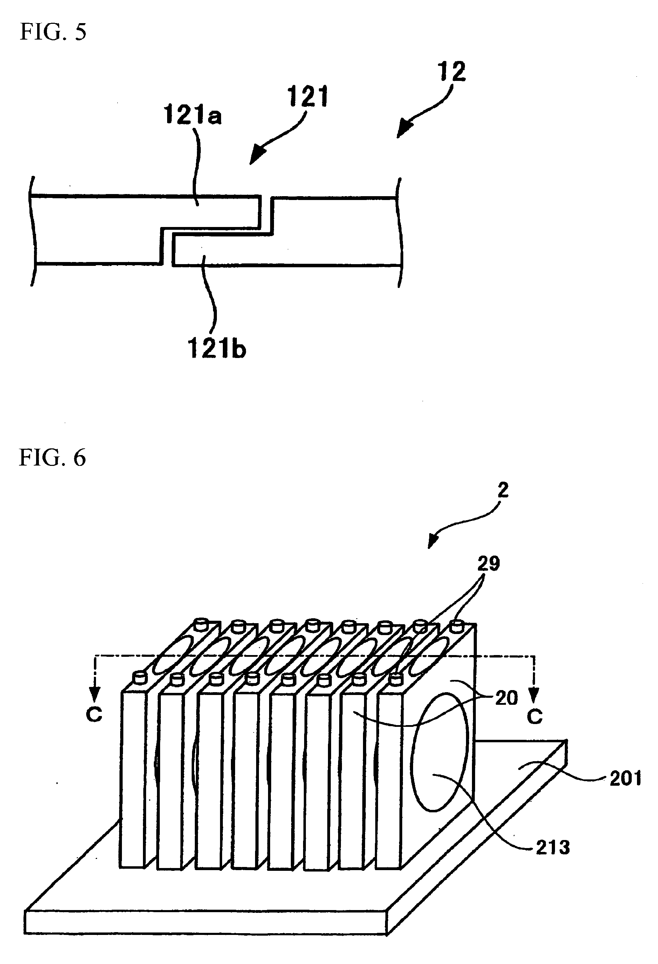

Fig. 5 is a schematic view of a mating part of the seal material 12.

The seal material 12 has a stepped mating part 121 as shown in Fig. 5. In order to fit the seal material 12 into the groove 11d of the peripheral surface 11c of the cell 11, the mating part 121 is once expanded elastically and fitted into the groove 11d. In the state in which the mating part 121 is fitted into the groove 11d, the mating part 121 has a shape to produce reliable sealing performance with steps 121a and 121b of the mating part 121 stacked on each other.

The seal material 12 is not firmly fixed to either the cell 11 or the cell holder 13, but can slide on the peripheral surface 11c of the cell 11 or the peripheral surface of the hole 13a of the cell holder 13 during thermal expansion/shrinkage. Accordingly, in spite of a difference between the thermal expansion coefficient of the seal material 12 and the thermal expansion coefficient of the cell 11 or the cell holder 13, sliding is allowed between the cell 11 and the seal material 12 and between the seal material 12 and the cell holder 13 during the thermal expansion/shrinkage. As a result, a dimensional change caused by the thermal expansion/shrinkage can be absorbed to keep the sealing property. In addition, sealing can be prevented from being damaged as in the case of the background art where bonding is carried out with a glass seal material.

Here, the seal material 12 is produced with a material whose thermal expansion coefficient is intermediate between the thermal expansion coefficient of the cell 11 and the thermal expansion coefficient of the cell holder 13. In this manner, sliding is secured uniformly between the cell 11 and the seal material 12 and between the seal material 12 and the cell holder 13 so that distortion caused by the thermal expansion/shrinkage can be relaxed uniformly between the cell 11 and the seal material 12 and between the seal material 12 and the cell holder 13. Alternatively, the seal material 12 may be produced with the same material as the cell holder 13. In this case, the distortion caused by the thermal expansion/shrinkage is relaxed by sliding between the cell 11 and the seal material 12. In addition, in this case, no sliding occurs between the seal material 12 and the cell holder 13 in spite of the thermal expansion/shrinkage. Therefore, the seal material 12 may be firmly fixed to the cell holder 13. In this embodiment, the cell holder 13 is made of an iron-based metal material, and the seal material 12 is also made of an iron-based metal material whose thermal expansion coefficient is 10 to 20 ×10⁻⁶/°C.

The structure of the cell holder 13 or the separator 14 (14A, 14B) will be described with reference to Fig. 1 and Fig. 4.

In addition to the hole 13a into which the cell 11 is fitted, four holes are formed around the hole 13a in the cell holder 13. Of the four holes, three holes 13b, 13c and 13d are depicted in Fig. 1, and the remaining one hole is located in a position hidden by the cell holder 14A and on the opposite side to the hole 13d with the hole 13a interposed therebetween.

Fig. 4 is a sectional view taken on the line with arrows B-B shown in Fig. 1. The two holes 13b and 13c are depicted in Fig. 4.

The hole 13b is a hole which forms an introduction channel for the fuel gas, and the hole 13c is a hole which forms a discharge channel for the fuel gas. On the other hand, the hole 13d is a hole which forms an introduction channel for the oxidizing gas, and the hole located in the position hidden by the separator 14A in Fig. 1 is a hole which forms a discharge channel for the oxidizing gas.

In addition, each separator 14A, 14B has a plate-like shape, and four holes 14b, 14c, 14d and 14e are also formed in the separator 14A, 14B. The four holes 14b, 14c, 14d and 14e communicate with the three holes 13b, 13c and 13d of the cell holder 13 and the remaining one hole hidden by the separator 14A in Fig. 1, respectively. That is, the four holes 14b, 14c, 14d and 14e of the separator 14A, 14B form a fuel gas introduction channel, a fuel gas discharge channel, an oxidizing gas introduction channel and an oxidizing gas discharge channel respectively. Fig. 4 shows the separator 14 having a shape in which the separators 14A and 14B constituting units adjacent to each other are combined. Fig. 4 illustrates the state in which the holes 14b and 14c of the separator 14A communicate with the holes 13b and 13c of the cell holder 13 respectively so as to form a fuel gas introduction channel 151 and a fuel gas discharge channel 152.

The separator 14A has a fuel gas channel 141 having a shape in which the cell 11 side surface of the plate material constituting the separator 14A is hollowed. Four support parts 142, which are not hollowed but left as they are, are formed on the way of the fuel gas channel 141. The support parts 142 play a role to abut against the first surface 11a of the cell 11 and support the cell 11 as shown in Fig. 4. Fuel gas supplied to the fuel cell through a not-shown fuel gas supply channel outside the fuel cell flows into the fuel gas channel 141 of each unit while passing through the fuel gas introduction channel 151. The fuel gas contacting the first surface 11a of each cell 11 serving as an anode is then discharged after passing through the fuel gas discharge channel 152 and further through a not-shown fuel gas exhaust channel outside the fuel cell.

On the other hand, the separator 14B includes an oxidizing gas channel 143 having a shape in which the cell 11 side surface of the plate material constituting the separator 14B is hollowed, in the same manner as in the fuel gas channel 141 of the separator 14A. The oxidizing gas channel 143 communicates with the hole 14d forming the oxidizing gas introduction channel and the hole 14e serving as the oxidizing gas discharge channel. Oxidizing gas introduced through the oxidizing gas introduction channel flows into the oxidizing gas channel 143. The oxidizing gas contacting the second surface 11b of each cell 11 serving as a cathode is then discharged through the oxidizing gas discharge channel. Also in the separator 14B, four support parts 144, which are not hollowed but left as they are, are formed on the way of the oxidizing gas channel 143. These support parts 144 play a role to abut against the second surface 11b of the cell 11 and support the cell 11.

In the fuel cell according to the first embodiment, a plurality of units are stacked as shown in Fig. 4. Further, the stacked units as a whole are fastened in the up/down direction of Fig. 4 by screwing or the like. Thus, the cell holders 13 and the separators 14 stacked are brought into tight contact with one another so as to secure a sealing property among the cell holders 13 and the separators 14. Alternatively, the following configuration may be used. That is, a thin plate material consisting of a heat-resistant material with moderate elasticity, such as a thin Mylar plate or a heat-resistant metal plate perforated so as not to close any channel such as the fuel gas introduction channel or the fuel gas channel, is interposed between the cell holder 13 and the separator 14, which are fastened as a whole. In this case, the sealing property between the cell holder 13 and the separator 14 is further improved.

The fuel cell according to the first embodiment has the annular seal material 12 fitted into the groove 11d of the peripheral surface 11c of the cell 11, and the seal material 12 is not firmly fixed to the cell 11 or the cell holder 13 but can slide on the cell 11 and the cell holder 13 during thermal expansion/shrinkage. Accordingly, distortion during the thermal expansion/shrinkage is relaxed. Thus, the sealing property can be kept in spite of the thermal expansion/shrinkage. In addition, sealing can be prevented from being damaged as in the case of the background art where bonding is carried out with a glass seal material, and the cell 11 can be prevented from deteriorating etc. due to the sealing damage.

Next, description will be made upon a fuel cell according to a second embodiment.

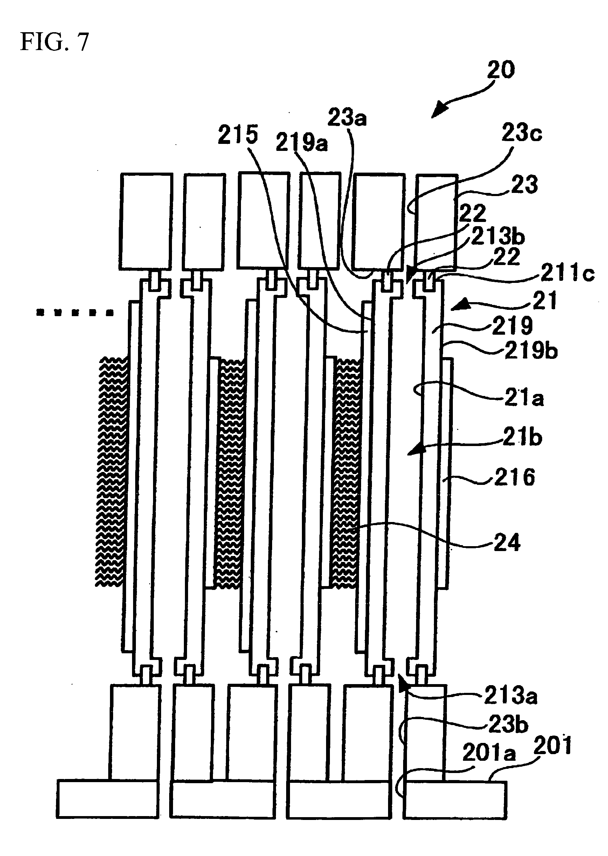

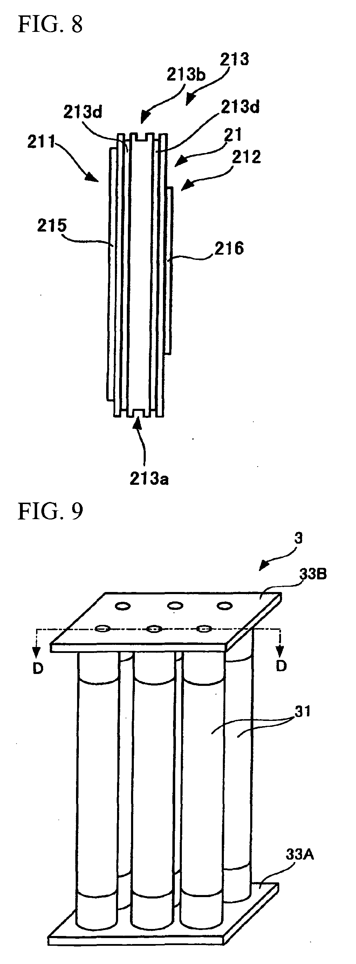

Fig. 6 is an external perspective view of the fuel cell according to the second embodiment of the invention. Fig. 7 is a sectional view taken on the line of arrows C-C shown in Fig. 6. Three units are depicted in section in Fig. 7. Further, Fig. 8 is a side view of one cell.

As shown in Fig. 6, the fuel cell 2 has a structure in which a plurality of units 20 are provided erectly on a base 201. Each unit 20 is fixed on the base 201 by two screws 29. In addition, as shown in Fig. 7, each unit 20 has a cell 21, two seal materials 22 and a cell holder 23.

As shown in Fig. 8, the cell 21 is formed into a disc-like shape including a first surface 211 whose peripheral edge is circular, a second surface 212 whose peripheral edge is circular likewise, and a peripheral surface 213 which connects the peripheral edge of the first surface 211 and the peripheral edge of the second surface 212 with each other so as to make a full circle. Further, as shown in the sectional view of Fig. 7, an internal space 21b surrounded by an inner wall surface 21a is formed. Further, a fuel gas introduction port 213a for introducing fuel gas into the internal space 21b is formed in a lower portion of the peripheral surface 213, and a fuel gas discharge port 213b for discharging the fuel gas from the internal space 21b is formed in an upper portion of the peripheral surface 213. In addition, grooves 213d into which the seal materials 22 are fitted are formed in both a portion of the peripheral surface 213 closer to the first surface 211 than the fuel gas introduction port 213a and the fuel gas discharge port 213b and a portion of the peripheral surface 213 closer to the second surface 212 than the fuel gas introduction port 213a and the fuel gas discharge port 213b. The peripheral surface 213 is a convex curved surface which is curved like a circle and which is connected to make a full circle. The peripheral surface 213 corresponds to an example of the first circumferential surface mentioned in the invention.

Here, the cell 21 is an anode supported cell in the same manner as in the aforementioned first embodiment. The cell 21 has a microstructural support 219 (see Fig. 7) in which porous ceramics is covered with an anode active material. The support 219 is bare in the internal space 21b of the cell 21, and the inner wall surface 21a forming the internal space 21b serves as an anode. In addition, an anode electrode 215 is laminated on a first surface 219a of the support 219 so as to form the first surface 211 (see Fig. 8) of the cell 21. In addition, the whole region of the support 219 excluding the region where the anode electrode 215 is laminated is covered with an electrolyte (not shown). Thus, the fuel gas flowing into the internal space 21b is prevented from passing through the support 219 and leaking therefrom. In addition, a counter electrode 216 serving as a cathode is formed on the electrolyte (not shown) in a second surface 219b of the support 219, so as to form the second surface 212 (see Fig. 8) of the cell 21. The annular seal materials 22 are fitted into the two grooves 213d formed at the peripheral surface 213 of the cell 21, respectively. Each seal material 22 is similar to the seal material in the first embodiment, and redundant description thereof will be omitted here.

The cell holder 23 plays a role to hold the cell 21. The cell holder 23 is fixed in tight contact with the base 201 by the screws 29 (see Fig. 6) in the state in which the cell holder 23 holds the cell 21. Thus, the cell holder 23 and the base 201 are brought into tight contact so that gas is prevented from leaking from a gap between the cell holder 23 and the base 201. Further, in the same manner as in the aforementioned first embodiment, the following configuration may be used. That is, a thin plate material such as a Mylar plate or a heat resistant metal plate is interposed between the cell holder 23 and the base 201, and the cell holder 23 is fastened onto the base 201.

A hole 23a (see Fig. 7) into which the cell 21 is fitted is formed in the cell holder 23. In the state in which the cell 21 is fitted into the hole 23a, the hole 23a faces the peripheral surface 213 of the cell 21 over a full circle. The hole 23a corresponds to an example of the second circumferential surface mentioned in the invention.

The seal material 22 is interposed between the peripheral surface 213 of the cell 21 and the peripheral surface of the hole 23a of the cell holder 23. The seal material 22 plays a role to separate a channel of fuel gas to which the inner wall surface 21a serving as an anode is exposed, that is, a channel of fuel gas flowing through the internal space 21b, from a channel of oxidizing gas flowing so that the second surface 212 of the cell 21 serving as a cathode is exposed to the oxidizing gas.

In addition, a conductive material 24 consisting of a combination of a large number of thin wires or the like made of a conductive foam material or metal is disposed between the cells 21 adjacent to each other. The conductive material 24 plays a role to electrically connect the first surface 211 of one cell 21 with the second surface 212 of the other cell adjacent to the cell 21. The conductive material 24 has a structure capable of not only the electric connection but also allowing the oxidizing gas to sufficiently contact the second surface 212 serving as a cathode so as not to interfere with the entrance of the oxidizing gas.

In the cell holder 23, in addition to the hole 23a into which the cell 21 is fitted, a fuel gas introduction channel 23b for introducing the fuel gas into the internal space 21b of the cell 21 is formed in a lower portion of the cell holder 23, and a fuel gas discharge channel 23c for discharging the fuel gas from the internal space 21b of the cell 21 is formed in an upper portion of the cell holder 23. Further, also in the base 201, a fuel gas introduction port 201a is formed to communicate with the fuel gas introduction channel 23b of the cell holder 23. Fuel gas is supplied to the fuel cell through a not-shown fuel gas supply channel outside the fuel cell. The fuel gas passes through the fuel gas introduction port 201a formed in the base 201 and the fuel gas introduction channel 23b formed in the cell holder 23, and then introduced into the internal space 21b of the cell 21 through the introduction port 213a formed in the cell 21. The fuel gas discharged from the internal space 21b of the cell 21 through the discharge port 213b formed in the cell 21 passes through the fuel gas discharge channel 23c formed in the cell holder 23. Then, the fuel gas is discharged through a not-shown external fuel gas discharge channel.

Oxidizing gas is likewise supplied from a not-shown external oxidizing gas supply channel. The oxidizing gas to which the second surface 212 of the cell 21 is exposed is then discharged through a not-shown oxidizing gas discharge channel. Alternatively, the air existing in the ambient environment may be used as the oxidizing gas. In this case, special equipment as the external oxidizing gas supply channel or the oxidizing gas discharge channel is not required, but it will go well if the air in the ambient environment is fed by a fan or the like so that the air can always contact the second surface 212 of the cell 21.

In the same manner as the case of the aforementioned fuel cell in the first embodiment, the fuel cell according to the second embodiment has the two annular seal materials 22 fitted into the two grooves 213d of the peripheral surface 213 of the cell 21 respectively, and the two seal materials 22 are not firmly fixed to the cell 21 or the cell holder 23 but can slide on the cell 21 and the cell holder 23 during thermal expansion/shrinkage. Accordingly, distortion during the thermal expansion/shrinkage is relaxed so that the sealing property can be always kept in spite of the thermal expansion/shrinkage. In addition, the seal materials 22 are prevented from being damaged due to the thermal expansion/shrinkage, or the performance is prevented from deteriorating due to gas leakage.

Next, description will be made upon a fuel cell according to a third embodiment of the invention.

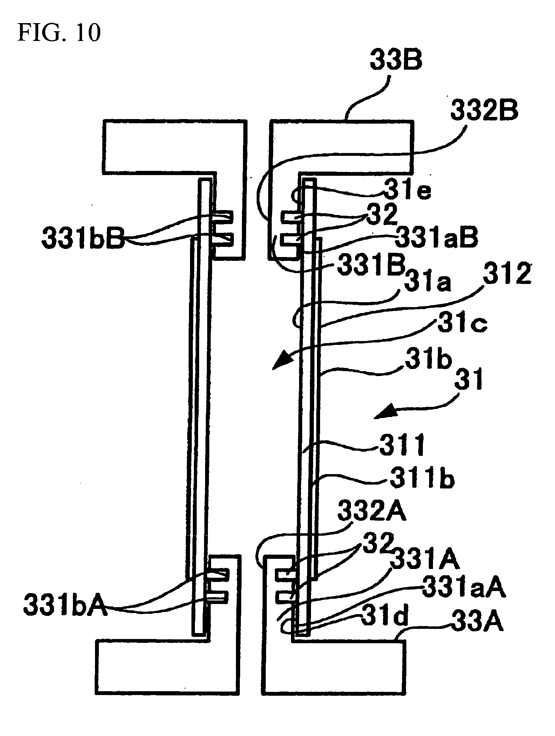

Fig. 9 is an external perspective view of the fuel cell according to the third embodiment of the invention. Fig. 10 is a sectional view taken on the line with arrows D-D shown in Fig. 9. One cell is depicted in section in Fig. 10.

As shown in Fig. 9, this fuel cell 3 has a configuration in which a plurality of cells 31 are supported by cell holders 33A and 33B separated vertically.

As shown in Fig. 10, each cell 31 is a cylindrical cell which has an inner peripheral surface 31a and an outer peripheral surface 31b and in which openings 31d and 33e are formed to communicate with an internal space 31c. The inner peripheral surface 31a of the cell 31 is a concave curved surface which is curved like a circle and which is connected to make a full circle. The inner peripheral surface 31a corresponds to an example of the first circumferential surface mentioned in the invention.

Here, the cell 31 is an anode supported cell in the same manner as in the cases of the aforementioned first and second embodiments. The cell 31 has a microstructural support 311 (see Fig. 10) in which porous ceramics is covered with an anode active material. The support 311 is bare in the inner peripheral surface 31a of the cell 31, and the inner peripheral surface 31a serves as an anode. The vicinities of the openings 31d and 31e at the opposite ends of the inner peripheral surface 31a of the support 311, the opposite end surfaces of the support 311, and the outer peripheral surface of the support 311 are covered with an electrolyte (not shown). Since these regions of the support 311 are covered with the electrolyte, fuel gas contacting the inner peripheral surface 31a is prevented from passing through the porous support 311 and leaking therefrom. In addition, a counter electrode 312 serving as a cathode is formed on the electrolyte (not shown) laminated on the outer peripheral surface 311b of the support 311.

The cell holders 33A and 33B have columnar plug-in parts 331A and 331B which are plugged into the openings 31d and 31e at the opposite ends of the cell 31, respectively. An introduction opening 332A for introducing fuel gas into the internal space 31c of the cell 31 is formed in the plug-in part 331A provided in the lower cell holder 31A, of the plug-in parts 331A and 331B. A discharge opening 332B for discharging the fuel gas introduced into the internal space 31c of the cell 31 is formed in the plug-in part 331B provided in the upper cell holder 33B. These plug-in parts 331A and 331B have outer peripheral surfaces 331aA and 331aB each of which is curved like a circle and which is connected to make a full circle. The outer peripheral surfaces 331aA and 331aB are opposed to the inner peripheral surface 31a of the cell 31 over a full circle. The outer peripheral surfaces 331aA and 331aB correspond to an example of the second circumferential surface mentioned in the invention. In each of the upper and lower plug-in parts 331A and 331B, two grooves 331bA, 331bB each making a full circle around the outer peripheral surface 331aA, 331aB of the plug-in part 331A, 331B are formed in the outer peripheral surface 331aA, 331aB. Annular seal materials 32 are fitted into the total of four grooves 331bA and 331bB respectively. The two seal materials 32 fitted into the grooves 331bA of the outer peripheral surface 331aA of the plug-in part 331A are fitted so that mating parts of the seal materials 32 are set in different positions at an angle of 180° with each other. So are the two seal materials 32 fitted into the plug-in part 331B. When the mating parts are set in different positions at an angle of 180° with each other in this manner, the sealing property can be further enhanced. The seal materials 32 are similar to the seal material in the aforementioned first embodiment, and redundant description thereof will be omitted.

Each of the seal materials 32 is interposed between the inner peripheral surface 31a of the cell 31 and the outer peripheral surface 331aA, 331aB of the plug-in part 331A, 331B of the cell holder 33A, 33B. The seal material 32 plays a role to separate a channel of fuel gas to which the inner wall surface 31a serving as an anode is exposed, that is, a channel of fuel gas flowing through the internal space 31c, from a channel of oxidizing gas to which the outer peripheral surface 31b of the cell 31 serving as a cathode is exposed. In the third embodiment, due to the sealing achieved by the two upper seal materials 32 and the two lower seal materials 32, the sealing property is further improved.

Fuel gas is supplied to the fuel cell through a not-shown fuel gas supply channel outside the fuel cell. The fuel gas is introduced into the internal space 31c of the cell 31 through the introduction opening 332A formed in the plug-in part 331A of the lower cell holder 33A. The fuel gas introduced into the internal space 31c of the cell 31 passes through the discharge opening 332B formed in the plug-in part 331B of the upper cell holder 33B, and is then discharged through a not-shown external fuel gas discharge channel.

Oxidizing gas enters gaps among the cells 31, and passes through a channel in which the outer peripheral surface 31b of each cell 31 serving as a cathode is exposed to the oxidizing gas.

As described above, the fuel cell according to the third embodiment has a total of four annular seal materials 32 fitted into the grooves 331bA and 331bB of the outer peripheral surfaces 331aA and 331aB of the plug-in parts 331A and 331B of the cell holders 33A and 33B. These seal materials 32 are not firmly fixed to the cell 31 or the cell holders 33A and 33B, but can slide on the cell 31 and the cell holders 33A and 33B during thermal expansion/shrinkage. Due to the sliding, stress or distortion generated from a difference in thermal expansion coefficient among materials during the thermal expansion/shrinkage is relaxed so that the sealing property can be always kept. In addition, the seal materials 32 are prevented from being damaged due to the thermal expansion/shrinkage or the performance is prevented from deteriorating due to gas leakage.

### EXAMPLES

Next, experimental results about the existence of deterioration in sealing performance due to thermal expansion/shrinkage will be shown by way of examples.

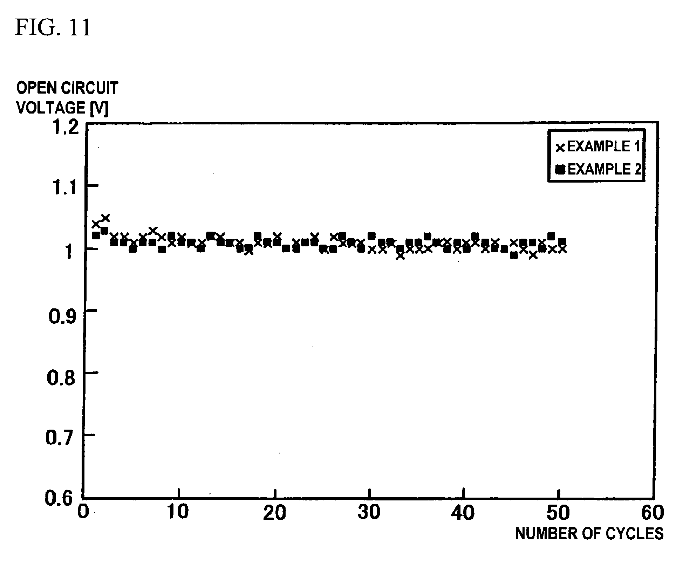

Fig. 11 is a graph showing the experimental results, which will be described below.

### (Example 1)

The flat plate type SOFC cell 11 shown in Fig. 1 was manufactured. The seal material 12 having a mating part formed into a shape shown in Fig. 5 was attached to the flat plate type SOFC cell 11. The flat plate type SOFC cell 11 was fixed to the cell holder 13 and interposed between the separators 14A and 14B from the opposite sides. Thus, the unit 10 configured thus was manufactured.

Here, the material of the cell holder 13 was a heat resistant metal named ZMG232 by Hitachi Metals Ltd., whose thermal expansion coefficient was 10 to 12 ×10⁻⁶1/K. The diameter of the cell holder 13 was 150 mmΦ. ZMG232 by Hitachi Metals Ltd. was used here for the seal material 12 in the same manner as the cell holder 13. The outer diameter of the seal material 12 was 150 mmΦ, which was equal to the diameter of the cell holder 13. The sectional dimensions of the seal material 12 were the same as those of the groove 11d, which was 2 mm deep and 1 mm wide. The seal material 12 was manufactured so that the diameter thereof could coincide with the diameter of the hole 13a of the cell holder 13 at 800°C which was an operating temperature.

In order to remove deterioration factors other than gas leakage, the unit 10 was placed in a nitrogen atmosphere for nitrogen purging while 4 hours were spent to increase the temperature of the unit 10 to 800°C. At 800°C, 5% heated hydrogen and oxygen were led to the anode and the cathode respectively, and a voltage in an open circuit with no load connected thereto was measured. After that, the nitrogen purging was kept while 4 hours were spent to cool down the unit 10 to the room temperature.

As shown in Fig. 11, lowering of the voltage in the open circuit was not recognized in spite of the cycle repeated 50 times. It is known that the voltage in the open circuit is lowered when gas leaks from the seal material 12. The fact that lowering of the voltage in the open circuit was not recognized means that the sealing property was kept.

### (Example 2)

The cylindrical SOFC cell 31 shown in Fig. 9 was manufactured. The seal material 32 were attached to the two upper grooves 331bA and the two lower grooves 331bB provided in the outer peripheral surfaces 311aA and 311aB of the plug-in parts 311A and 311B of the cell holders 31A and 31B so that the mating parts of the seal materials 32 were set in different directions at an angle of 180° with each other. The cell 31 was then attached to the cell holders 31A and 31B.

Here, the material of the cell holders 31A and 31B was ZMG232 by Hitachi Metals Ltd., in the same manner as in the aforementioned Example 1. The outer diameter of the plug-in part 331A, 331B of each cell holder 31A, 31B was 20 mmΦ. ZMG232 by Hitachi Metals Ltd. was also used for the seal materials 32 in the same manner as the cell holders 31A and 31B. The outer diameter of each seal material 32 was 20 mmΦ, which was equal to the outer diameter of the plug-in part 331A, 331B of each cell holder 31A, 31B. As for the sectional dimensions of the seal materials 32 and the sectional dimensions of the grooves 331bA and 331bB, each was 2 mm deep and 1 mm wide in the same manner as in Example 1. Each seal material 32 was manufactured so that the diameter thereof could coincide with the diameter of the inner peripheral surface 31a of the cell 31 at 800°C which was an operating temperature.

Nitrogen purging was carried out while 4 hours were spent to increase the temperature of the cell 31 to 800°C. At 800°C, 5% heated hydrogen and oxygen were led to the anode and the cathode respectively, and a voltage in an open circuit with no load connected thereto was measured. After that, the nitrogen purging was kept while 4 hours were spent to cool down the cell 31 to the room temperature.

As shown in Fig. 11, lowering of the voltage in the open circuit was not recognized in spite of the cycle repeated 50 times.

As described above, in each of the aforementioned embodiments, due to the structure in which an annular seal material is attached to slide during thermal expansion/shrinkage, the sealing property can be kept in spite of a temperature change of a repeated heat cycle etc.

## Claims

1. A fuel cell (2, 3) comprising:
a cell portion (31) which comprises a first electrode to be exposed to a first gas, a second electrode (312) to be exposed to a second gas and an electrolyte (112) interposed between the first electrode and the second electrode (312) and which has a first circumferential surface (31 a) consisting of a curved surface curved in a circular shape and connected to make a full circle;
a holding member (33A, 33B) which has a second circumferential surface (331aA, 331 aB) consisting of a curved surface curved in a circular shape and connected to make a full circle and opposed to the first circumferential surface (31 a) over the full circle, and which holds the cell portion (31); and
an annular seal material (32) which is interposed between the first circumferential surface (31a) and the second circumferential surface (331aA, 331aB) to separate a channel of the first gas and a channel of the second gas from each other so that the seal material (32) is not firmly fixed to at least the first circumferential surface (31a) and is slidable on at least the first circumferential surface (31a) during thermal expansion and shrinkage, wherein the seal material (32) is formed with same material as a portion of the second circumferential surface (331aA, 331aB) of the holding member (33A, 33B).

2. The fuel cell (2, 3) according to claim 1, wherein a groove (11d, 111d, 213d, 331bA, 331bB) making a full circle in a circumferential direction is formed in one of the first circumferential surface (31a) and the second circumferential surface (331aA, 331aB) which is formed as a convex surface, and the seal material has a mating part so that the seal material is fitted into the groove (11d, 111d, 213d, 331bA, 331bB).

3. The fuel cell according to claim 2, wherein the cell portion (31) has a disc-like shape having a first surface (11a, 111a, 211, 219a) whose peripheral edge is circular and which acts as the first electrode, a second surface (11b, 111b, 212, 219b) whose peripheral edge is circular and at which the second electrode (312) is formed, and a peripheral surface (11c, 111c, 213) which connects the peripheral edge of the first surface (11a, 111a, 211, 219a) and the peripheral edge of the second surface (11b, 111b, 212, 219b) with each other so as to make a full circle, wherein the peripheral surface (11c, 111c, 213) is the first circumferential surface, and the groove (11d, 111d, 213d, 331bA, 331bB) is formed at the peripheral surface (11c, 111c, 213).

4. The fuel cell according to Claim 2, wherein the cell portion (31) has a disc-like shape having a first surface (11a, 111a, 211, 219a) whose peripheral edge is circular and at which the first electrode is formed, a second surface (11b, 111b, 212, 219b) whose peripheral edge is circular and at which the second electrode (312) is formed, and a peripheral surface (11c, 111c, 213) which connects the peripheral edge of the first surface (11a, 111a, 211, 219a) and the peripheral edge of the second surface (11b, 111b, 212, 219b) with each other so as to make a full circle; an internal space (21b, 31c) surrounded by an inner wall surface (21a) acting as the first electrode is further formed in the cell portion (31); and a gas channel connected to the internal space (21 b, 31 c) is provided at the peripheral surface (11c, 111c, 213), wherein the peripheral surface (11c, 111c, 213) is the first circumferential surface, the groove (11d, 111d, 213d, 331bA, 331bB) is formed at each of a portion of the peripheral surface (11c, 111c, 213) closer to the first surface (11a, 111a, 211, 219a) than the gas channel and a portion of the peripheral surface (11c, 111c, 213) closer to the second surface (11b, 111b, 212, 219b) than the gas channel.

5. The fuel cell according to claim 2, wherein the cell portion (31) has a cylindrical shape having an inner peripheral surface (31a) which acts as the first electrode and an outer peripheral surface (31b, 311b, 331aA, 331aB) at which the second electrode (312) is formed, and an opening connected to an internal space (21 b, 31 c) of the cell portion (31) is formed at least one end of the cell portion (31), the inner peripheral surface (31a) being the first circumferential surface; and the holding member has a columnar plug-in part (331A, 331B) which is plugged into the opening and at which a gas channel is formed, an outer peripheral surface (31b, 311b, 331aA, 331aB) of the plug-in part (331A, 331B) being the second circumferential surface, the groove (11d, 111d, 213d, 331bA, 331bB) being formed at the outer peripheral surface (31b, 311b, 331aA, 331aB) of the plug-in part (331A, 331B).

## Patentansprüche

1. Brennstoffzelle (2, 3), umfassend:
einen Zellabschnitt (31), der eine erste Elektrode umfasst, um an ein erstes Gas ausgesetzt zu sein, eine zweite Elektrode (312), um an ein zweites Gas ausgesetzt zu sein, und einen Elektrolyt (112), der zwischen der ersten Elektrode und der zweiten Elektrode (312) angeordnet ist, und der eine erste Umfangsfläche (31 a) aufweist, die aus einer gekrümmten Fläche besteht, die in einer Kreisform gekrümmt und verbunden ist, um einen vollständigen Kreis zu bilden;
ein Halteelement (33A, 33B), das eine zweite Umfangsfläche (331 aA, 331 aB) aufweist, die aus einer gekrümmten Fläche besteht, die in einer Kreisform gekrümmt und verbunden ist, um einen vollständigen Kreis zu bilden, und der ersten Umfangsfläche (31 a) über dem vollständigen Kreis gegenüber liegt, und der den Zellabschnitt (31) hält; und
ein ringförmiges Dichtungsmaterial (32), das zwischen der ersten Umfangsfläche (31 a) und der zweiten Umfangsfläche (331 aA,331 aB) angeordnet ist, um einen Kanal des ersten Gases und einen Kanal des zweiten Gases voneinander zu trennen, so dass das Dichtungsmaterial (32) mindestens mit der ersten Umfangsfläche (31 a) nicht fest verbunden ist und auf mindestens der ersten Umfangsfläche (31 a) während der Wärmeausdehnung und -schrumpfung gleitbar ist, wobei das Dichtungsmaterial (32) mit dem gleichen Material wie ein Abschnitt der zweiten Umfangsfläche (331 aA, 331 aB) des Halteelements (33A, 33B) gebildet ist.

2. Brennstoffzelle (2, 3) nach Anspruch 1, wobei eine Nut (11 d, 111d, 213d, 331bA, 331 bB), die einen vollständigen Kreis in einer Umfangsrichtung bildet, in einer der ersten Umfangsfläche (31 a) und der zweiten Umfangsfläche (331 aA, 331 aB) gebildet ist, die als eine konvexe Fläche gebildet ist, und das Dichtungsmaterial einen passenden Teil aufweist, so dass das Dichtungsmaterial in die Nut (11d, 111 d, 213d, 331bA, 331bB) gepasst ist.

3. Brennstoffzelle nach Anspruch 2, wobei der Zellabschnitt (31) eine Scheiben-ähnliche Form mit einer ersten Fläche (11a, 111 a, 211, 219a) aufweist, deren periphere Kante kreisförmig ist, und die als die erste Elektrode dient, eine zweite Fläche (11 b, 111 b, 212, 219b), deren periphere Kante kreisförmig ist, und an der die zweite Elektrode (312) gebildet ist, und eine periphere Fläche (11 c, 111 c, 213), die die erste periphere Kante (11a, 111a, 211, 219a) und die periphere Kante der zweiten Fläche (11b, 111b, 212, 219b) miteinander verbindet, um einen vollständigen Kreis zu bilden, wobei die periphere Fläche (11 c, 111 c, 213) die erste Umfangsfläche ist, und die Nut (11 d, 111 d, 213d, 331bA, 331bB) an der peripheren Fläche (11c, 111 c, 213) gebildet ist.

4. Brennstoffzelle nach Anspruch 2, wobei der Zellabschnitt (31) eine Scheiben-ähnliche Form mit einer ersten Fläche (11a, 111 a, 211, 219a) aufweist, deren periphere Kante kreisförmig ist, und an der die erste Elektrode gebildet ist, eine zweite Fläche (11 b, 111 b, 212, 219b), deren periphere Kante kreisförmig ist, und an der die zweite Elektrode (312) gebildet ist, und eine periphere Fläche (11c, 111 c, 213), die die erste periphere Kante der ersten Fläche (11a, 111 a, 211, 219a) und die periphere Kante der zweiten Fläche (11 b, 111 b, 212, 219b) miteinander verbindet, um einen vollständigen Kreis zu bilden; und ein innerer Raum (21 b, 31 c), der von der Fläche der inneren Wand (21 a) umgeben ist, die als die erste Elektrode dient, weiter im Zellabschnitt (31) gebildet ist; und ein Gaskanal, verbunden mit dem inneren Raum (21 b, 31 c) an der peripheren Fläche (11 c, 111 c, 213) bereitgestellt ist, wobei die periphere Fläche (11 c, 111 c, 213) die erste Umfangsfläche ist, die Nut (11 d, 111d, 213d, 331bA, 331bB) an jedem eines Abschnitts der peripheren Fläche (11 c, 111 c, 213), die näher an der ersten Fläche (11a, 111 a, 211, 219a) als der Gaskanal liegt, und einem Abschnitt der peripheren Fläche (11 c, 111 c, 213), der näher an der zweiten Fläche (11b, 111 b, 212, 219b) als der Gaskanal liegt, gebildet ist.

5. Brennstoffzelle nach Anspruch 2, wobei der Zellabschnitt (31) eine zylindrische Form mit einer inneren peripheren Fläche (31 a) aufweist, die als die erste Elektrode dient, und eine äußere periphere Fläche (31 b, 311 b, 331 aA, 331 aB), an der die zweite Elektrode (312) gebildet ist, und eine Öffnung, verbunden mit einem inneren Raum (21 b, 31 c) des Zellabschnitts (31) an mindestens einem Ende des Zellabschnitts (31) gebildet ist, wobei die innere periphere Fläche (31 a) die erste Umfangsfläche ist; und das Halteelement einen säulenförmigen Steckteil (331A, 331 B) aufweist, der in die Öffnung gesteckt ist, und an dem ein Gaskanal gebildet ist, wobei eine äußere periphere Fläche (31 b, 311b, 331 aA, 331 aB) des Steckteils (331 A, 331 B) die zweite Umfangsfläche ist, wobei die Nut (11d, 111d, 213d, 331bA, 331bB) an der äußeren peripheren Fläche (31 b, 311 b, 331 aA, 331 aB) des Steckteils (331 A, 331 B) gebildet ist.

## Revendications

1. Pile à combustible (2, 3) comprenant :
une partie de pile (31) qui comprend une première électrode à exposer à un premier gaz, une deuxième électrode (312) à exposer à un deuxième gaz et un électrolyte (112) interposé entre la première électrode et la deuxième électrode (312) et qui comporte une première surface circonférentielle (31a) consistant en une surface incurvée qui est incurvée en une forme circulaire et reliée pour réaliser un cercle complet;
un élément de support (33A, 33B) qui comporte une deuxième surface circonférentielle (331aA, 331aB) consistant en une surface incurvée qui est incurvée en une forme circulaire et reliée pour réaliser un cercle complet et face à la première surface circonférentielle (31a) sur le cercle complet, et qui supporte la partie de pile (31) ; et
un matériau d'étanchéité (32) annulaire qui est interposé entre la première surface circonférentielle (31a) et la deuxième surface circonférentielle (331aA, 331aB) pour séparer un canal du premier gaz et un canal du deuxième gaz l'un de l'autre de sorte que le matériau d'étanchéité (32) ne soit pas fixé fermement au moins à la première surface circonférentielle (31a) et puisse coulisser au moins sur la première surface circonférentielle (31a) pendant une dilatation et un retrait thermiques, dans laquelle le matériau d'étanchéité (32) est formé avec le même matériau qu'une partie de la deuxième surface circonférentielle (331aA, 331aB) de l'élément de support (33A, 33B).

2. Pile à combustible (2, 3) selon la revendication 1, dans laquelle une gorge (11d, 111d, 213d, 331bA, 331bB) réalisant un cercle complet dans une direction circonférentielle est formée dans l'une de la première surface circonférentielle (31a) et de la deuxième surface circonférentielle (331aA, 331aB) qui est formée en tant que surface convexe, et le matériau d'étanchéité comporte une partie correspondante de sorte que le matériau d'étanchéité soit inséré dans la gorge (11d, 111d, 213d, 331bA, 331bB).

3. Pile à combustible selon la revendication 2, dans laquelle la partie de pile (31) a une forme similaire à un disque comportant une première surface (11a, 111a, 211, 219a) dont le bord périphérique est circulaire et qui agit en tant que première électrode, une deuxième surface (11b, 111b, 212, 219b) dont le bord périphérique est circulaire et au niveau de laquelle la deuxième électrode (312) est formée, et une surface périphérique (11c, 111c, 213) qui relie le bord périphérique de la première surface (11a, 111a, 211, 219a) et le bord périphérique de la deuxième surface (11b, 111b, 212, 219b) l'un à l'autre de manière à réaliser un cercle complet, dans laquelle la surface périphérique (11c, 111c, 213) est la première surface circonférentielle, et la gorge (11d, 111d, 213d, 331bA, 331bB) est formée au niveau de la surface périphérique (11c, 111c, 213).

4. Pile à combustible selon la revendication 2, dans laquelle la partie de pile (31) a une forme similaire à un disque comportant une première surface (11a, 111a, 211, 219a) dont le bord périphérique est circulaire et au niveau de laquelle la première électrode est formée, une deuxième surface (11b, 111b, 212, 219b) dont le bord périphérique est circulaire et au niveau de laquelle la deuxième électrode (312) est formée, et une surface périphérique (11c, 111c, 213) qui relie le bord périphérique de la première surface (11a, 111a, 211, 219a) et le bord périphérique de la deuxième surface (11b, 111b, 212, 219b) l'un à l'autre de manière à réaliser un cercle complet ; un espace interne (21b, 31c) entouré par une surface de paroi intérieure (21a) agissant en tant que première électrode est en outre formé dans la partie de pile (31) ; et un canal de gaz relié à l'espace interne (21b, 31c) est prévu au niveau de la surface périphérique (11c, 111c, 213), dans laquelle la surface périphérique (11c, 111c, 213) est la première surface circonférentielle, la gorge (11d, 111d, 213d, 331bA, 331bB) est formée au niveau de chacune d'une partie de la surface périphérique (11c, 111c, 213) plus proche de la première surface (11a, 111a, 211, 219a) que le canal de gaz et d'une partie de la surface périphérique (11c, 111c, 213) plus proche de la deuxième surface (11b, 111b, 212, 219b) que le canal de gaz.

5. Pile à combustible selon la revendication 2, dans laquelle la partie de pile (31) a une forme cylindrique comportant une surface périphérique intérieure (31a) qui agit en tant que première électrode et une surface périphérique extérieure (31b, 311b, 331aA, 331aB) au niveau de laquelle la deuxième électrode (312) est formée, et une ouverture reliée à un espace interne (21b, 31c) de la partie de pile (31) est formée au moins à une extrémité de la partie de pile (31), la surface périphérique intérieure (31a) étant la première surface circonférentielle ; et l'élément de support comporte une partie enfichable (331A, 331B) colonnaire qui est enfichée dans l'ouverture et au niveau de laquelle un canal de gaz est formé, une surface périphérique extérieure (31b, 311b, 331aA, 331aB) de la partie enfichable (331A, 331B) étant la deuxième surface circonférentielle, la gorge (11d, 111d, 213d, 331bA, 331bB) étant formée au niveau de la surface périphérique extérieure (31b, 311b, 331aA, 331aB) de la partie enfichable (331A, 331B).
